# DEMANDE DE BREVET EUROPEEN

(11) **EP 1 023 964 A1**
(43) Date de publication de la demande: **02.08.2000**
(21) Numéro de dépôt: 99101927.4
(22) Date de dépôt: 29.01.1999
(51) Int. Cl.: B23K 1/00, A44C 5/02

(54) **Procédé et dispositif de fixation de tiges d'articulation et bracelet formé de maillons articulés fixés à l'aide d'un tel dispositif**

(71) Demandeur: WERTHANOR S.A., CH-2400 Le Locle (CH)
(72) Inventeur: Burdet, Yves, 2400 Le Locle (CH); Wenger, Sylvain, 1291 Commugny (CH); Eray, Joseph, 2855 Glovelier (CH)
(74) Mandataire: Ravenel, Thierry Gérard Louis

(57) **Abrégé**

L'invention concerne un dispositif de fixation d'une tige d'articulation métallique par soudage dans un trou ménagé dans un élément métallique, le soudage étant réalisé par la fusion d'une quantité de soudure entre la tige et une paroi du trou après l'introduction de la tige dans le trou, caractérisé en ce que la tige d'articulation comprend un évidement intérieur aux deux extrémités de la tige et en ce que ladite soudure s'étend au moins partiellement dans ledit évidement.

## Description

La présente invention concerne un dispositif de fixation par soudage de tiges d'articulation sur des éléments métalliques destinés notamment à former des maillons articulés d'un bracelet tel qu'un bracelet de montre ou analogue. Plus particulièrement, l'invention concerne un dispositif de fixation par soudage de tiges d'articulation d'un bracelet à maillons articulés composés chacun d'éléments de maillons centraux et marginaux, dans des trous borgnes ménagés dans les éléments de maillons marginaux du bracelet.

L'invention concerne aussi un bracelet à maillons articulés fixés à l'aide du dispositif de fixation défini ci-dessus.

L'invention concerne également un procédé de fixation d'une tige d'articulation métallique dans un trou borgne ménagé dans un élément métallique.

On connaît déjà de la demande de brevet EP 0842 731 des bracelets métalliques comprenant des maillons articulés formés chacun de plusieurs éléments de maillon, respectivement des éléments de maillon centraux et des éléments de maillon marginaux. Les maillons sont reliés entre eux au moyen de tiges d'articulation cylindriques qui sont d'une part disposées dans des passages prévus dans des faces latérales des éléments de maillon centraux et d'autre part engagées à chacune de leurs extrémités dans un trou borgne prévu dans les éléments de maillon marginaux. Chaque tige est fixée sur les éléments de maillons marginaux et articulée sur les éléments de maillon centraux. Selon ce document, la fixation de la tige sur un élément de maillon marginal est réalisée par soudage des extrémités de la tige dans le fond du trou borgne. Les extrémités des tiges comprennent chacune une portion de plus faible diamètre sur laquelle on dépose une rondelle de soudure, puis on assemble le bracelet en introduisant les tiges dans les passages des maillons centraux et dans le fond des trous borgnes des maillons marginaux. On procède alors au soudage des tiges sur les maillons marginaux en introduisant le bracelet ainsi monté dans un four dans lequel les rondelles de soudure sont fondues.

Ce procédé de soudage des tiges sur les maillons présente toutefois certains inconvénients.

En effet, l'opération de pose des rondelles de soudure sur les extrémités des tiges d'articulation, notamment en raison de leurs très faibles dimensions typiquement 0,8 mm de diamètre, est longue et délicate. Le risque que les rondelles de soudure tombent lors des diverses manipulations des tiges avant leur montage est non négligeable. De plus, il est difficile de contrôler efficacement la présence des rondelles de soudure à l'extrémité des tiges avant l'assemblage du bracelet et son introduction dans le four. Or l'absence de soudure à une extrémité de la tige pourrait conduire à un risque de désassemblage total ou partiel des éléments de maillons lors du porter et donc à la perte du bracelet et, le cas échéant, de l'objet qui lui est attaché.

L'invention a donc pour but principal de remédier aux inconvénients de l'art antérieur susmentionné en fournissant un dispositif de fixation de tiges d'articulation notamment de maillons de bracelet par soudage qui fournisse une liaison sûre entre les tiges et les éléments de maillon et qui soit d'une mise en oeuvre simple et peu coûteuse.

A cet effet l'invention a pour objet un dispositif de fixation d'une tige d'articulation métallique par soudage dans un trou ménagé dans un élément métallique, le soudage étant réalisé par la fusion d'une quantité de soudure entre la tige et une paroi du trou après l'introduction de la tige dans le trou, caractérisé en ce que la tige d'articulation comprend un évidement intérieur débouchant vers l'extérieur de la tige et en ce que ladite soudure s'étend au moins partiellement dans ledit évidement.

Grâce à ces caractéristiques, les problèmes délicats de mise en place et pertes des rondelles de soudure sont supprimés. L'utilisation d'un tel dispositif facilite donc la fabrication des bracelets tout en augmentant la fiabilité de la liaison des maillons du bracelet.

Selon un mode de réalisation avantageux de l'invention, l'évidement est axial, s'étend sur toute la longueur de la tige et débouche à ses deux extrémités.

Les tiges d'articulation peuvent ainsi être formées de tubes dits "présoudurés" aisément disponibles dans le commerce dans différents diamètres, ces tubes pouvant être coupés à des longueurs désirées. On notera que ce type de tube est couramment utilisé par les orfèvres dans la fabrication de chaînes à anneaux soudés.

Selon un autre aspect, l'invention a également pour objet un bracelet à maillons articulés, notamment pour montre, les maillons étant formés chacun de plusieurs éléments de maillon, respectivement des éléments de maillon centraux et des éléments de maillon marginaux, reliés par des tiges d'articulation qui sont, d'une part, articulées dans des passages prévus à cet effet dans les éléments de maillon centraux et, d'autre part, fixées par leurs extrémités dans des trous prévus dans les éléments de maillon marginaux, caractérisé en ce que lesdites tiges d'articulation sont fixées dans les trous à l'aide d'un dispositif de fixation tel que défini ci-dessus.

Selon encore un autre aspect, l'invention concerne un procédé de fixation d'une tige d'articulation métallique dans un trou ménagé dans un élément métallique, caractérisé en ce qu'il comprend les étapes consistant à :
- se munir d'une tige d'articulation comprenant un évidement intérieur débouchant vers l'extérieur et dans lequel est disposée de la soudure
- introduire la tige dans le trou de sorte que ledit évidement débouche en regard d'une paroi du trou et
- chauffer l'ensemble formé de la tige et de l'élément pour faire fondre la soudure et réaliser l'assemblage de la tige dans ledit trou, la soudure circulant vers l'extérieur de l'évidement.

D'autres caractéristiques et avantages de l'invention apparaîtront plus clairement à lecture de la description suivante d'un mode de réalisation de l'invention donné à titre purement illustratif et non limitatif, cette description étant faite en liaison avec les dessins dans lesquels :
- la figure 1, est une vue en plan avec une coupe partielle d'une portion d'un bracelet à maillons articulés muni du dispositif de fixation d'une tige d'articulation selon l'invention;
- la figure 2 montre une coupe de l'extrémité d'une tige d'articulation selon le dispositif de fixation de l'invention;
- la figure 3 est une coupe partielle agrandie représentant le dispositif de l'invention avant la fusion de la soudure, l'extrémité de la tige étant disposée dans le fond d'un trou borgne d'un maillon latéral d'un bracelet;
- la figure 4 est une vue partielle agrandie montrant la tige d'articulation dans le trou borgne après fusion de la soudure;
- les figures 5 et 6 sont des vues similaires à la figure 3, dans lesquelles on utilise une variante de réalisation de la tige d'articulation.

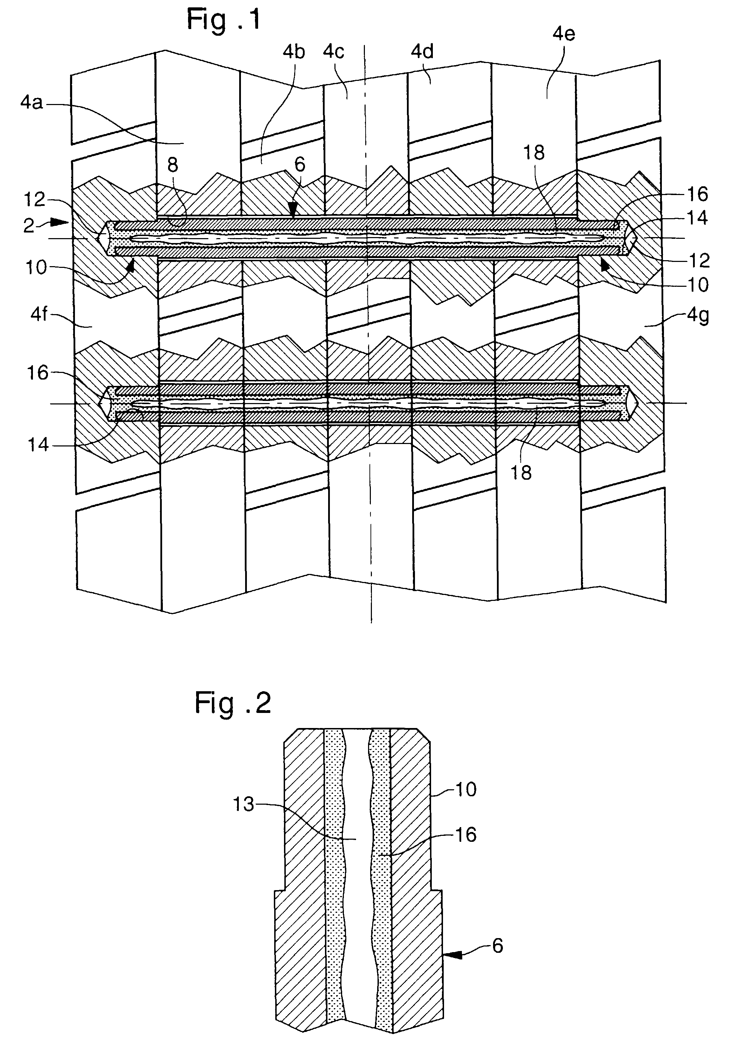

La figure 1 représente une portion de bracelet désignée par la référence numérique générale 1. Cette portion de bracelet 1 comporte des maillons articulés métalliques 2 formés chacun de plusieurs éléments de maillon respectivement des éléments de maillon centraux 4a-4e, et des éléments de maillons marginaux 4f et 4 g.

Les maillons 2 sont reliés entre eux par des tiges ou goupilles 6 d'articulation qui sont, d'une part, articulées dans des passages 8 prévus à cet effet dans les éléments de maillons centraux 4a-4e et, d'autre part, fixées par leurs extrémités ou parties extrêmes 10 (figure 2) dans des trous 12 prévus dans les éléments de maillon marginaux 4f et 4g et délimités par des parois 14. Les trous 12 sont borgnes dans l'exemple illustré.

Les tiges 6 sont immobilisées dans les trous 12 à l'aide d'un dispositif de fixation par soudage qui est illustré par les figures 1 à 4.

Le soudage est réalisé par la fusion d'une quantité de soudure 16 entre les tiges et les parois 14 des trous borgnes 12 après l'introduction des tiges 6 dans ces trous. Selon une caractéristique importante de l'invention, la tige d'articulation comprend un évidement intérieur 18 dans lequel est disposée une quantité de soudure déterminée pour réaliser le soudage. La quantité de soudure dépend essentiellement du volume disponible de la cavité dans laquelle la tige doit être soudée. L'évidement 18 débouche vers l'extérieur, et plus précisément en regard d'une paroi du trou dans lequel la tige doit être soudée. Dans le mode de réalisation illustré, l'évidement est axial, s'étend sur toute la longueur de la tige et débouche aux deux extrémités de la tige.

Pour des raisons de commodité les tiges 6 sont réalisées à partir de tubes présoudurés découpés. Par tubes présoudurés, on entend des tubes sur les parois intérieures desquels à été préalablement déposée de la soudure. La soudure est donc solidaire des parois intérieures des tiges. Ces tubes présoudurés sont disponibles sur le marché dans différents diamètres et peuvent être aisément découpés à la longueur souhaitée pour réaliser les tiges 6. L'utilisation de tiges ainsi réalisées permet d'éviter toute opération de mise en place et de manipulation de la soudure et garantit la présence de soudure dans chacune des tiges. De tels tubes présoudurés peuvent être obtenus commercialement et peuvent être typiquement achetés chez Précinox, La chaux-de-fonds, Suisse, sous la désignation "tube présouduré".

Les extrémités 10 des tiges 6 définissent avec les parois 14 du trou 12 borgne une cavité dans laquelle s'étend la soudure 16 après la fusion de cette dernière. On notera que le tige 6 comprend un épaulement extérieur qui limite l'enfoncement de la tige et détermine la volume de ladite cavité.

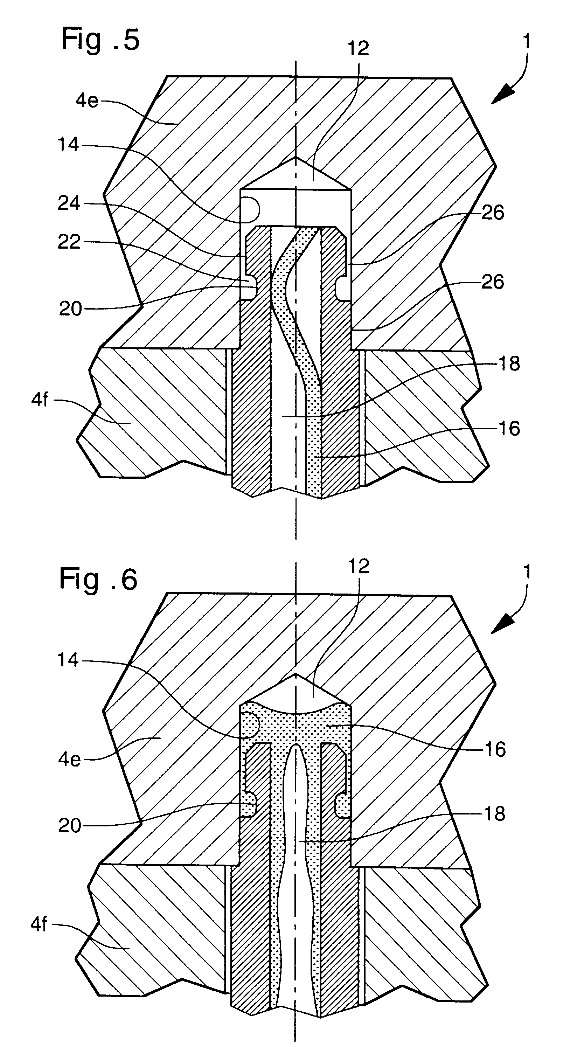

Aux figures 5 et 6 on a représenté une variante de réalisation du dispositif de l'invention dans laquelle la soudure 16 n'est pas solidaire des parois de l'évidement 18. Dans cette variante la soudure est formée d'un tronçon de fil 16, ce dernier étant introduit à l'intérieur de l'évidement 18 de la tige 6. Dans la mesure du possible le tronçon de fil est bloqué dans l'évidement 18 avant son montage sur les maillons. Le blocage peut être par exemple réalisée en déformant une extrémité du tronçon de fil 16 et en coinçant cette extrémité déformée entre deux portions opposées de la paroi intérieure de l'évidement 18.

On notera également que les tiges comprennent sur l'extérieur de leurs parties extrêmes une gorge annulaire 20 qui forme avec la paroi latérale 14 du trou 12 une cavité 22. Cette cavité 22 est séparée axialement de l'extrémité de la tige 6 par une zone intermédiaire 24 de la tige 6. Cette zone intermédiaire 24 est ajustée à frottement doux dans le trou 12, c'est à dire que les dimensions du trou 12 et de la zone 24 permettent un déplacement à la main de la tige 6 dans le trou. La zone intermédiaire 24 comprend en outre des moyens de communication 26 qui s'étendent entre l'extrémité de la tige 6 et la cavité 22 pour canaliser de la soudure en fusion circulant par capillarité depuis l'extrémité de la tige 6 vers la cavité 22 dans laquelle cette soudure peut être collectée au moment du chauffage de la soudure 16. Les moyens de communication 26 permettent aussi une évacuation de l'air emprisonné entre le fond du trou et l'extrémité de la tige facilitant ainsi l'introduction de la tige 6 dans le trou 12. Les moyens de communication 26 peuvent être par exemple formés par les stries d'un moletage qui est réalisé dans la zone intermédiaire 24 et qui délimite une pluralité de micropassages 26 dans lesquels la soudure 16 en fusion peut circuler par capillarité, ces micropassages 26 débouchant dans la cavité 22.

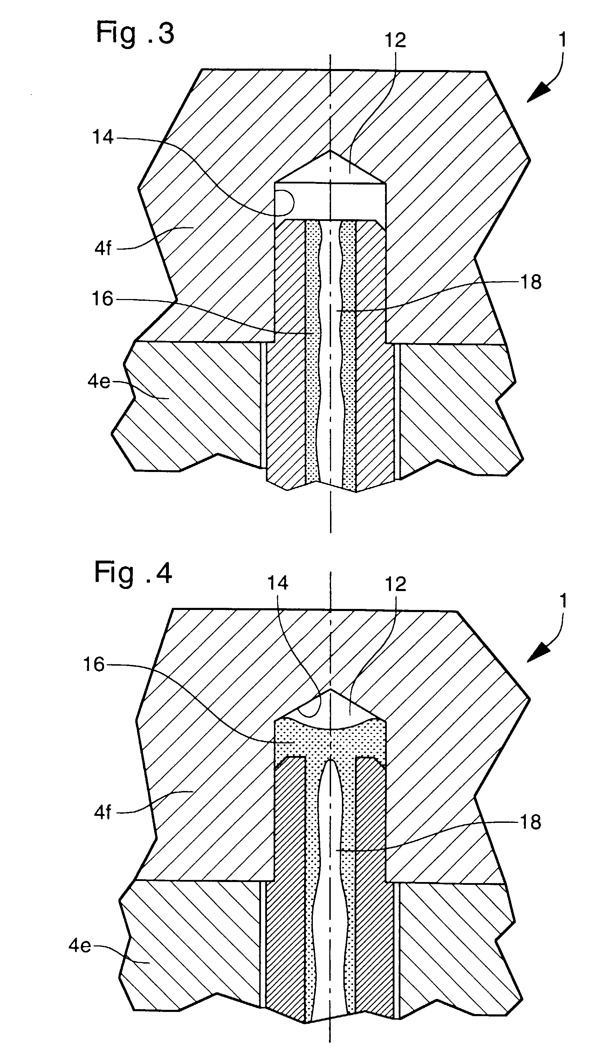

On notera que ce moletage permet en outre d'éliminer les problèmes d'ajustement précis de la tige dans le trou. On peut notamment ainsi réaliser des ajustements avec des tolérances de l'ordre de 5/100ème de millimètres entre ces deux éléments. Un tel moletage peut bien entendu être appliqué sur l'extrémité 10 illustré aux figures 3 et 4.

Le volume de la cavité 22 est de préférence supérieur ou égal à 30 % du volume de la soudure 16 qui assure la fixation de la tige 6 sur l'élément de maillon. La demanderesse a constaté qu'un tel volume permettait de pallier le problème de débordement de la soudure en dehors du trou dans la plupart des circonstances.

Dans le mode de réalisation représenté aux figures 5 et 6, on remarquera que l'extrémité 10 de la tige 6 comprend une deuxième partie moletée 28 qui sert de guidage axial et facilite l'introduction de l'extrémité de la tige 6 dans le trou 12.

La soudure 16 est choisie de façon classique et a généralement un point de fusion inférieur d'au moins 100°C au point de fusion le plus bas des éléments à souder. A titre d'exemple, une soudure à base d'argent ayant un point de fusion de l'ordre de 800°C peut être utilisée pour souder une tige et un élément de maillon réalisés en acier.

Pour fixer les idées, les diamètres extérieurs des tiges 6 sont de l'ordre de 0,8 mm et les diamètres intérieurs sont de l'ordre de 0,15 mm.

Le procédé de fixation d'une tige d'articulation 6 dans un trou borgne 12 d'un élément de maillon 4e va maintenant être décrit en liaison avec les figures 1 à 6.

On se munit tout d'abord d'une tige 6 ou goupille d'articulation évidée contenant de la soudure 16, la soudure 16 étant soit solidaire des parois de l'évidement 18 de la tige 6 (figures 2 et 3), soit sous forme d'un tronçon de fil introduit dans l'évidement 18 (figure 5).

La tige 6 est alors introduite dans le trou 12 de sorte que ledit évidement débouche en regard de la paroi 14 du trou 12. Dans le cas où la zone intermédiaire 24 de la tige 6 est moletée, les stries du moletage peuvent se déformer au cours de l'introduction de la tige 6 dans le trou 12, ce qui facilite, d'une part l'ajustement de la tige 6 dans le trou 12 et assure, d'autre part, un maintien en position relative de la tige et de l'élément de maillon avant l'opération de soudage ultérieure.

On procède ensuite à l'opération de soudage qui consiste à chauffer l'ensemble formé de la tige 6 et de l'élément de maillon 4e pour faire fondre la soudure 16 et réaliser l'assemblage de ces deux éléments. Au cours du chauffage, la soudure située dans l'évidement 18 est amenée à l'état liquide et est aspirée par capillarité ou s'écoule par gravité hors de l'évidement 18 et amenée à circuler par les mêmes phénomènes entre la surface extérieure de la tige 6, notamment dans la zone intermédiaire 24 et la paroi 14 du trou 12, à partir de l'évidement 18. Le cas échéant la soudure s'étend jusqu'à l'intérieure de la cavité 22 (figure 6).

Cette cavité 22 assure ainsi un dispositif de collecte et d'arrêt de la soudure 16 qui au moment de la fusion pourrait circuler par capillarité hors du trou et bloquer par exemple les éléments de maillons centraux dans le cas du bracelet décrit à la figure 1.

L'opération de soudage est de préférence réalisée en disposant l'ensemble à souder sur une bande qui défile dans un four dans lequel règne une atmosphère neutre.

## Revendications

1. Dispositif de fixation d'une tige d'articulation métallique par soudage dans un trou ménagé dans un élément métallique, le soudage étant réalisé par la fusion d'une quantité de soudure entre la tige et une paroi du trou après l'introduction de la tige dans le trou, caractérisé en ce que la tige d'articulation comprend un évidement intérieur débouchant vers l'extérieur de la tige et en ce que ladite soudure s'étend au moins partiellement dans ledit évidement.

2. Dispositif de fixation selon la revendication 1, caractérisé en ce que ledit évidement est axial, s'étend sur toute la longueur de la tige et débouche aux deux extrémités de la tige.

3. Dispositif de fixation selon la revendication 2, caractérisé en ce que la soudure est solidaire des parois dudit évidement

4. Dispositif de fixation selon la revendication 2, caractérisé en ce que la soudure présente, avant la fusion, la forme d'un tronçon de fil de soudure rapporté dans ledit évidement.

5. Dispositif de fixation selon l'une des revendications 2 à 4, caractérisé en ce que les extrémités de la tige sont moletées

6. Dispositif de fixation selon l'une des revendications 2 à 5, caractérisé en ce que les extrémités de la tige comprennent au moins une gorge annulaire.

7. Bracelet à maillons articulés, notamment pour montre, les maillons étant formés chacun de plusieurs éléments de maillon, respectivement des éléments de maillon centraux et des éléments de maillon marginaux, reliés par des tiges d'articulation qui sont, d'une part, articulées dans des passages prévus à cet effet dans les éléments de maillon centraux et, d'autre part, fixés par leurs extrémités dans des trous prévus dans les éléments de maillon marginaux, caractérisé en ce que lesdites tiges d'articulation sont fixées dans les trous à l'aide d'un dispositif de fixation défini selon l'une des revendications 1 à 6.

8. Procédé de fixation d'une tige d'articulation métallique dans un trou ménagé dans un élément métallique, caractérisé en ce qu'il comprend les étapes consistant à :
- se munir d'une tige d'articulation comprenant un évidement intérieur débouchant vers l'extérieur et dans lequel est disposé de la soudure
- introduire la tige dans le trou de sorte que ledit évidement débouche en regard d'une paroi du trou et
- chauffer l'ensemble formé de la tige et de l'élément pour faire fondre la soudure et réaliser l'assemblage de la tige dans ledit trou, la soudure circulant vers l'extérieur de l'évidement.

9. Procédé d'assemblage selon la revendication 8, caractérisé en ce que ledit évidement est axial, s'étend sur toute la longueur de la tige, débouche aux deux extrémités de la tige et en ce que la soudure est solidaire des parois dudit évidement.

10. Procédé d'assemblage selon l'une des revendications 8 ou 9 caractérisé en ce que les parties extrêmes de la tige sont moletées.

11. Procédé d'assemblage selon l'une des revendications 8 à 10 caractérisé en ce que des parties extrêmes de la tige comprennent au moins une gorge annulaire.
